# EUROPEAN PATENT SPECIFICATION

(11) **EP 3 979 057 B1**
(45) Date of publication and mention of the grant of the patent: **17.01.2024**
(21) Application number: 21173033.8
(22) Date of filing: 10.05.2021
(51) Int. Cl.: G06F 3/0482, G06F 3/04817, G06F 3/04842, B60K 37/06, B62J 50/22, B62K 11/14, B62K 23/02, B60K 35/00

(54) **DISPLAY SYSTEM AND VEHICLE**
ANZEIGESYSTEM UND FAHRZEUG
SYSTÈME D'AFFICHAGE ET VÉHICULE

(30) Priority: 30.09.2020 JP 2020166174
(43) Date of publication of application: 06.04.2022
(73) Proprietor: Yamaha Hatsudoki Kabushiki Kaisha, Iwata-shi, Shizuoka 438-8501 (JP)
(72) Inventor: SUGIYAMA, Yuichi, Shizuoka, 438-8501 (JP)
(74) Representative: Grünecker Patent- und Rechtsanwälte PartG mbB

(56) References cited:
- EP-A2- 2 875 981
- CN-U- 205 737 285
- US-A1- 2009 195 515
- US-A1- 2017 334 500

## Description

The present disclosure relates to a display system according to the preamble of the independent claim 1 and a straddled vehicle equipped with the display system. Such a display system can be taken from The prior art document EP 2 875 981 A2. US 2017/334500 A1 discloses display systems and methods for a recreational vehicle.

JP-A-2015-085851 discloses a straddled vehicle that is equipped with a display unit on which a menu picture to change various settings relating to the vehicle is displayed.

Incidentally, in the straddled vehicle disclosed in JP-A-2015-085851, the rider needs to operate, many times, a setting operation unit (handle switch) consisting of physical switches to display the menu picture on the display unit. Furthermore, the rider can change various settings relating to the vehicle by selecting various icons displayed in a vehicle characteristics picture that is in a lower layer than the menu picture. On the other hand, the rider needs to operate, many times, physical switches of the setting operation unit to complete changing of various settings relating to the vehicle, as a result of which the number of times the rider needs to operate the setting operation unit becomes large. In particular, to return the display picture displayed on the display unit from the vehicle characteristics picture to the menu picture, the rider needs to move the cursor from an icon currently selected to a certain icon using the setting operation unit. As such, this display system installed in the vehicle has room for improvement in terms of its usability.

It is an object of the present invention to provide display system that can increase the usability when installed in a vehicle. According to the present invention said object is solved by a display system having the features of independent claim 1. Preferred embodiments are laid down in the dependent claims.

According to one or more aspects of the present disclosure, there is provided a display system which is to be installed in a straddled vehicle. The display system includes: a display unit; and a communication unit which is communicably connected to a portable terminal. The display system is configured to: switch a display mode of the display unit from a first display mode to a second display mode in response to an operation performed by a rider on a handle switch of the vehicle; display a main display picture on the display unit in the first display mode; and display at least a launcher display picture on the display unit in the second display mode. In the launcher display picture, at least some of a plurality of icons are displayed side by side in a certain direction, wherein each of the icons is associated with a function of the portable terminal or a function of the vehicle. In the launcher display picture, a first icon that is currently selected by the rider, a second icon that was selected by the rider last time, a third icon to be selected by the rider next time, and a back button located adjacent to the first icon are displayed in the certain direction. The first icon is located between the second icon and the third icon. The display system is configured to change a layer of the launcher display picture to a layer that is higher than its current layer or switch the display mode of the display unit from the second display mode to the first display mode, in response to an operation that has been performed by the rider on the handle switch in a state that the back button is currently selected.

According to this configuration, the display mode of the display unit can be switched from the first display mode in which the main display picture is displayed to the second display mode in which at least the launcher display picture is displayed in response to an operation performed by the rider on the handle switch. Furthermore, the layer of the launcher display picture can be changed quickly to a layer that is higher than its current layer or the display mode of the display unit can be switched from the second display mode to the first display mode in response to an operation that has been performed by the rider on the handle switch in a state that the back button is selected currently. The usability of the display system can be increased because the display mode of the display unit can be switched and the layer of the launcher display picture can be changed quickly in response to an operation performed by the rider on the handle switch.

The display system is configured to switch the display mode of the display unit from the first display mode to the second display mode in response to one operation performed by the rider on the handle switch.

According to this measure, the display system can be increased in convenience and operability because the display mode of the display unit is switched in response to one operation performed by the rider on the handle switch.

The launcher display picture and the main display picture may be displayed on the display unit in the second display mode. A visual aspect of the main display picture is changed such that the launcher display picture is emphasized, when the display mode is switched from the first display mode to the second display mode.

According to this measure, the visibility of the launcher display picture is increased because the launcher display picture is emphasized.

The plurality of icons may comprise one or more icons that are displayed in the launcher display picture and one or more icons that are not displayed in the launcher display picture.

With this measure, some of all the icons are displayed in the launcher display picture. As a result, the visibility of the icons displayed in the launcher display picture is made higher than in a case that all the icons are displayed in the launcher display picture.

The display system may be configured to change the at least some of the icons displayed in the launcher display picture by moving the at least some of the icons in the certain direction in response to an operation performed by the rider on the handle switch.

According to this measure, the operability of the display system can be increased because the icons displayed in the launcher display picture can be moved in the certain direction by the rider's operation on the handle switch.

The display system may be configured to emphasize the first icon that is currently selected by the rider.

With this measure, the rider can recognize the first icon selected currently by seeing the first icon being emphasized.

The display system may be configured to:
change the layer of the launcher display picture to a layer that is one level higher than its current layer in response to a short push operation performed by the rider on the handle switch in a state that the back button is currently selected; and
switch the display mode of the display unit from the second display mode to the first display mode in response to a long push operation performed by the rider on the handle switch in a state that the back button is currently selected.

According to this measure, the layer of the launcher display picture can be changed to a layer that is one level higher than its current layer in response to a short push operation performed by the rider on the handle switch in a state that the back button is selected currently. Furthermore, the display mode of the display unit can be switched from the second display mode to the first display mode in response to a long push operation performed by the rider on the handle switch in a state that the back button is selected currently. As a result, the operability of the display system can be increased. Furthermore, the overall size of the handle switch can be reduced because it is not necessary to equip the handle switch with a physical back button.

The back button may be displayed in the launcher display picture so as to be located between the first icon and the second icon while the at least some of the icons are moved in the certain direction.

According to this measure, since the back button is located between the first icon selected currently and the second icon that was selected last time, it is possible to prevent such a situation that the back button that is located adjacent to the first icon is always selected while the plural icons are moved in the certain direction.

The back button may be displayed in the launcher display picture in a state that the back button has been firstly selected when the layer of the launcher display picture has been changed to a layer that is one level higher than its current layer.

With this measure, the back button has been selected first when the layer of the launcher display picture has been changed to a layer that is one level higher than its current layer. As a result, the rider can change the layer of the launcher display picture further only through a simple operation (e.g., short push operation) on the handle switch.

When the display mode is switched from the first display mode to the second display mode, the launcher display picture may be slid into the main display picture.

According to this measure, by seeing the slide-in operation of the launcher display picture, the rider can recognize, intuitively, that the display mode of the display unit has been changed from the first display mode to the second display mode.

When the display mode is switched from the second display mode to the first display mode, the launcher display picture may be slid out from the main display picture.

According to this measure, by seeing the slide-out operation of the launcher display picture, the rider can recognize, intuitively, that the display mode of the display unit has been changed from the second display mode to the first display mode.

When the handle switch has not been operated by the rider for a certain period in the second display mode, the display mode may be switched automatically from the second display mode to the first display mode.

According to this measure, the operability of the display system is increased because the display mode is switched automatically from the second display mode to the first display mode when the handle switch has not been operated by the rider for the certain period.

The plurality of icons may be associated with different functions.

According to this measure, the operability of the display system is increased because the plural icons are correlated with different functions.

The display unit may be disposed between a tachometer and a speedometer.

According to this measure, a movement of the line of sight of the rider can be reduced when the line of sight of the rider is moved from the tachometer or the speedometer to a display picture displayed on the display unit or from the display picture to the tachometer or the speedometer.

The main display picture may include infotainment information transmitted from the portable terminal.

The handle switch consists of an upward button, a downward button, and an enter button that is disposed between the upward button and the downward button.

According to this measure, the rider can operate the display system using the upward button, the downward button, and the enter button that are provided in the handle switch. Although the handle switch is equipped with only three buttons, the back button that is displayed in the launcher display picture can prevent lowering of the usability of the display system properly. Furthermore, the size of the handle switch can be reduced because the back button makes it unnecessary to equip the handle switch with a physical home button.

The display system may display the back button in the launcher display picture when the launcher display picture is displayed on the display unit and an upward button or a downward button of the handle switch has been operated by the rider.

The display system may be configured to:
display the back button in the launcher display picture such that the back button is located adjacent to a bottom edge of the first icon, in response to an operation performed by the rider on the upward button; and
display the back button in the launcher display picture such that the back button is located adjacent to a top edge of the first icon, in response to an operation performed by the rider on the downward button.

This measure can prevent such a situation that the back button that is located adjacent to the first icon is always selected by the rider's successive operation on the upward button or the downward button.

A straddled vehicle including the display system can be provided.

### BRIEF DESCRIPTION OF DRAWINGS

Fig. 1 is a view showing a front portion of a straddled vehicle which is equipped with a display system according to an embodiment;
Fig. 2 is a system configuration diagram of the straddled vehicle including the display system according to the embodiment;
Fig. 3 is a rough diagram showing an example configuration of a handle switch;
Fig. 4 shows an example main display picture displayed on the screen of a display unit;
Fig. 5 shows an example of a meter display picture and a launcher display picture displayed on the screen of the display unit;
Fig. 6 shows how icons displayed in the launcher display picture are moved in a +D2 direction from the state shown in Fig. 5;
Fig. 7 shows how icons displayed in the launcher display picture are moved in a -D2 direction from the state shown in Fig. 5;
Fig. 8 shows various example icons relating to vehicle settings;
Fig. 9 shows a state that a back button displayed in the launcher display picture is selected;
Fig. 10 shows a state that the back button displayed in the launcher display picture is selected by operating the downward button;
Fig. 11 shows how icons displayed in the launcher display picture have moved in the +D2 direction from the state shown in Fig. 10; and
Fig. 12 shows an icon for height adjustment of a windshield.

### DETAILED DESCRIPTION OF EMBODIMENT

A preferred embodiment of the present teaching will be hereinafter described with reference to the drawings. For convenience of description, dimensions of each of members shown in the drawings may be different from those of an actual member.

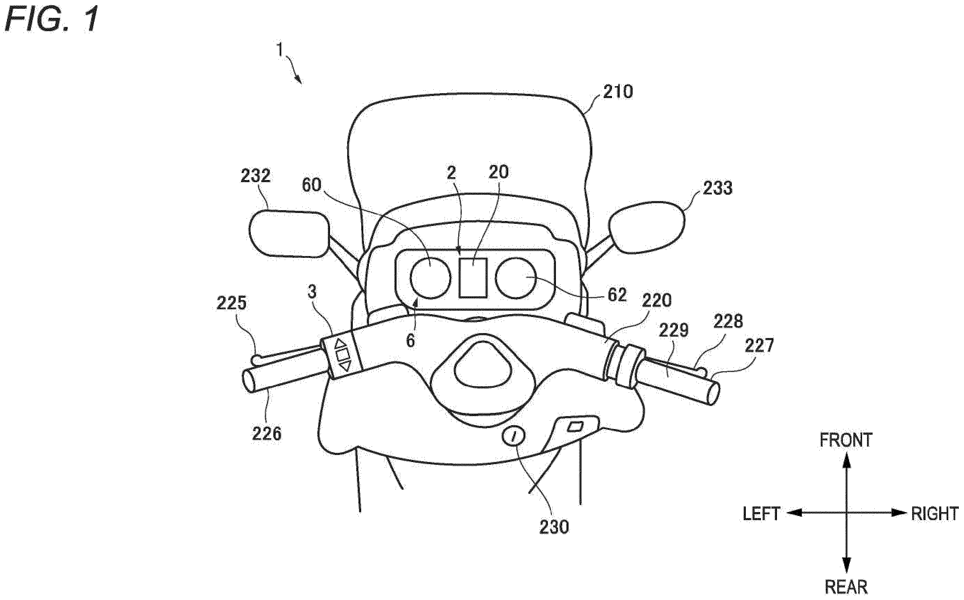

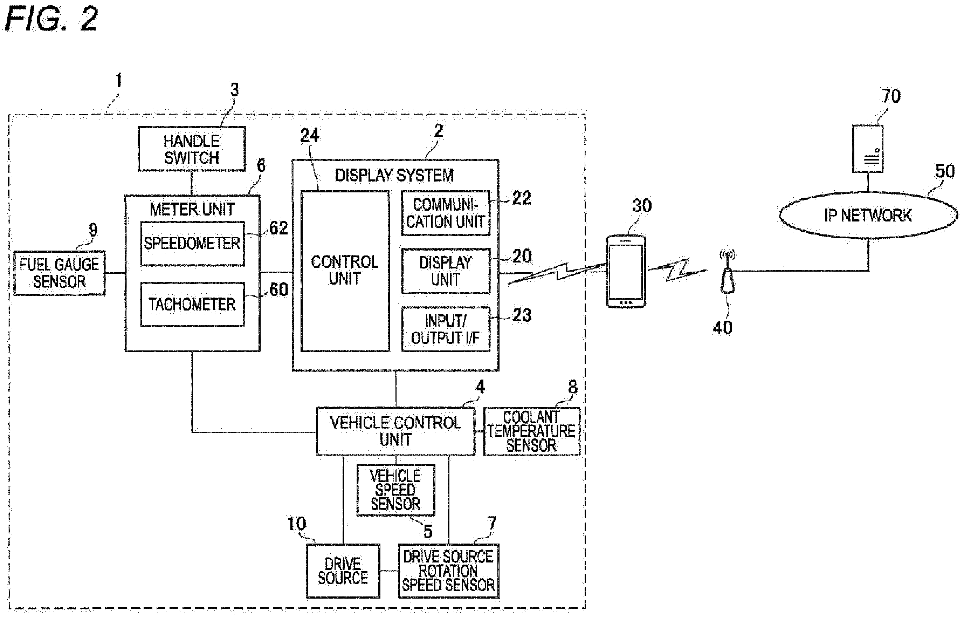

First, the configuration of a straddled vehicle 1 (hereinafter simply referred to as a "vehicle 1") which is equipped with a display system 2 according to the embodiment will be described with reference to Figs. 1 and 2. Fig. 1 is a view showing a front portion of the vehicle 1 which is equipped with the display system 2. Fig. 2 is a system configuration diagram of the vehicle 1 including the display system 2.

As shown in Fig. 1, the vehicle 1 is, for example, a motorcycle that can turn when the rider inclines the vehicle body. The vehicle 1 is equipped with the display system 2 for presenting running information of the vehicle 1 and infotainment information to the rider. The display system 2 includes a display unit 20. The display unit 20 is disposed between a windscreen 210 and a handlebar 220 in the front-rear direction of the vehicle 1 and between a left side mirror 232 and a right side mirror 233 in the left-right direction of the vehicle 1.

The handlebar 220 has a left handle 226 and a right handle 227. The left handle 226 is equipped with a handle switch 3 and a brake lever 225. The right handle 227 is equipped with a throttle grip 229 which functions as an accelerator and a brake lever 228. A main switch key unit 230 for turning on or off driving of the vehicle 1 is provided below the handlebar 220.

The display unit 20 is disposed between a speedometer 62 and a tachometer 60 in the left-right direction of the vehicle 1. The speedometer 62 is configured to present speed information of the vehicle 1 to the rider. The tachometer 60 is configured to present information indicating a rotation speed of a drive source 10 (see Fig. 2) to the rider. Since the display unit 20 is disposed between the speedometer 62 and the tachometer 60, a movement of the line of sight of the rider can be reduced when the line of sight of the rider moves from the speedometer 62 or the tachometer 60 to the display screen of the display unit 20 or from the display screen of the display unit 20 to the speedometer 62 or the tachometer 60.

Although the vehicle 1 shown in Fig. 1 is a scooter-type motorcycle, the vehicle 1 is not limited thereto, that is, the vehicle 1 may be a motorcycle of another type. Furthermore, the vehicle 1 is not limited to a two-wheel motorcycle and may be a straddled three-wheel or four-wheel vehicle.

Next, the system configuration of the vehicle 1 will be described with reference to Fig. 2. For convenience of description, Fig. 2 shows only part of the elements of the vehicle 1. As shown in Fig. 2, the vehicle 1 is equipped with the display system 2, the handle switch 3, a meter unit 6, and a vehicle control unit 4. The vehicle 1 is further equipped with a vehicle speed sensor 5, a drive source 10, a drive source rotation speed sensor 7, a coolant temperature sensor 8, and a fuel gauge sensor 9. The display system 2 includes the display unit 20, a communication unit 22, an input/output interface 23, and a control unit 24.

The display system 2 is configured to display running information (e.g., speed information etc.) of the vehicle 1 after receiving running information data of the vehicle 1 from the vehicle control unit 4. Furthermore, the display system 2 is configured to receive infotainment information (e.g., map information) from a portable terminal 30 being carried by the rider and to display the received infotainment information. The display system 2 may be configured to transmit, to the portable terminal 30, running information data of the vehicle 1 received from the vehicle control unit 4. The display system 2 may be communicably connected to the portable terminal 30 according to such a standard as SDL (Smart Device Link; registered trademark).

As described above, the display unit 20 is disposed in a front portion of the vehicle 1. For example, the display unit 20 is a liquid crystal display or an organic EL display. The communication unit 22 is communicably connected to the portable terminal 30. For example, the communication unit 22 may be a wireless communication unit that is communicably connected to the portable terminal 30 by radio. The wireless communication unit may be equipped with a radio frequency circuit (RF circuit) and a transmission/reception antenna and connected to the portable terminal 30 according to a wireless communication standard such as WiFi (registered trademark) or Bluetooth (registered trademark). The communication unit 22 may be connected to the portable terminal 30 by a cable such as a USB cable.

The portable terminal 30 is, for example, a smartphone, a cellphone, or a wearable device. The portable terminal 30 is communicably connected to a wireless base station 40 by radio. More specifically, the portable terminal 30 may be equipped with a SIM card for data communication and connected to a wireless base station 40 so as to be able to communicate with it via a fourth-generation (4G) or fifth-generation (5G) mobile communication system. The portable terminal 30 is connected to an external server 70 via a wireless base station 40, a core network (not shown) for portable terminals, and an IP (Internet Protocol) network 50. For example, the portable terminal 30 may receive infotainment information (e.g., map information, musical information, message information, or weather information) and transmit the received infotainment information to the display system 2. On the other hand, the portable terminal 30 may receive running information of the vehicle 1 from the display system 2 and transmit the received running information of the vehicle 1 to the external server 70. The portable terminal 30 may be equipped with a GPS (Global Positioning System) for receiving current position information of the portable terminal 30. The portable terminal 30 may transmit, to the display system 2, map information received from the external server 70 and current position information acquired by the GPS.

The input/output interface 23 is configured to connect the display system 2 to external devices (e.g., meter unit 6 and vehicle control unit 4). For example, the vehicle control unit 4 and the meter unit 6 are connected to the input/output interface 23 by communication tables such as CAN tables.

The control unit 24 is configured to control the individual constituent elements of the display system 2. The control unit 24 includes a computer system including one or more processors and one or more memories and an electronic circuit configured by active elements and passive elements. For example, the processor includes at least one of a CPU (central processing unit), an MPU (microprocessing unit), and a GPU (graphic processing unit). The memory or memories include a ROM (read-only memory) and a RAM (random access memory). The RAM may include a VRAM (video RAM). The ROM may include a flash memory. The processor may be configured to develop control programs stored in the ROM on the RAM and to execute various kinds of processing by cooperating with the RAM. The computer system may include an ASIC (application-specific integrated circuit) or an FPGA (field-programmable gate array).

The control unit 24 receives running information of the vehicle 1 from the vehicle control unit 4 and displays the received running information on the display unit 20. Furthermore, the control unit 24 receives infotainment information from the portable terminal 30 and displays the received infotainment information on the display unit 20. More specifically, in case where the display mode of the display system 2 is a projection mode, the control unit 24 sends image data received from the portable terminal 30 to the display unit 20. In this case, the control unit 24 may adjust the image data received from the portable terminal 30 and sends the adjusted image data to the display unit 20. On the other hand, in case where the display mode of the display system 2 is a template mode, the control unit 24 generates image data on the basis of infotainment information received from the portable terminal 30 and template image data stored in the ROM and sends the generated image data to the display unit 20.

The display system 2 shown in Fig. 2 may be implemented as either a single module or two or more separate modules.

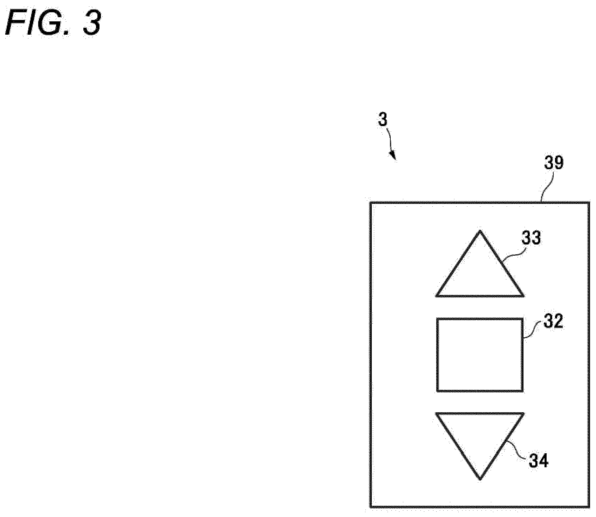

The handle switch 3, which is provided on the left handle 226, is configured to generate an operation signal corresponding to an operation of the rider and to send the generated operation signal to the meter unit 6. Then the rider has operated the display system 2 using the handle switch 3, an operation signal generated by the handle switch 3 is sent to the display system 2 via the meter unit 6. As shown in Fig. 3, the handle switch 3 has a housing 39, an enter button 32, an upward button 33, and a downward button 34. The enter button 32 is disposed between the upward button 33 and the downward button 34. In the embodiment, the handle switch 3 consists of only the three buttons, that is, the enter button 32, the upward button 33, and the downward button 34. That is, the handle switch 3 may not be equipped with a home button and hence its external size is reduced. It is noted that the configuration of the handle switch 3 shown in Fig. 3 is an example.

The meter unit 6 has the speedometer 62 and the tachometer 60. The meter unit 6 is connected to each of the handle switch 3, the fuel gauge sensor 9, the display system 2, and the vehicle control unit 4. In particular, the meter unit 6 is connected to the display system 2 and the vehicle control unit 4 by CAN communication cables so as to be able to communicate with them.

The vehicle control unit 4 is configured to control running of the vehicle 1. In particular, the vehicle control unit 4 is configured to control the drive source 10 on the basis of an accelerator operation signal or a brake operation signal that is output from an HMI (human machine interface) such as a throttle grip or a brake lever. For example, the vehicle control unit 4 includes at least one electronic control unit (ECU). The ECU may include a computer system including one or more processors and one or more memories and an electronic circuit configured by active elements and passive elements. The vehicle control unit 4 is configured to send detection signals that are output from various sensors installed in the vehicle 1 to the display system 2 and the display system 2 via CAN communication cables.

The vehicle speed sensor 5 is configured to detect a speed of the vehicle 1 and to send a detection signal indicating the detected speed of the vehicle 1 to the vehicle control unit 4. The drive source rotation speed sensor 7 is configured to detect a rotation speed of the drive source 10 and to send a detection signal indicating the detected rotation speed of the drive source 10 to the vehicle control unit 4. The drive source 10 is configured to generate drive power for the vehicle 1 and is an engine and/or a motor.

The coolant temperature sensor 8 is configured to detect a temperature of coolant for cooling the drive source 10 and to send a detection signal indicating the detected temperature of the coolant to the vehicle control unit 4. In case where the drive source 10 is not a water-cooled engine, the vehicle 1 may not be equipped with the coolant temperature sensor 8. In this case, the vehicle 1 may be equipped with an engine temperature sensor that is configured to detect an engine temperature in place of the coolant temperature sensor 8.

The fuel gauge sensor 9 is configured to detect a residual fuel amount (e.g., a residual amount of gasoline) for the drive source 10 and to send a detection signal indicating the detected residual fuel amount to the display system 2. In case where the drive source 10 is a motor, the vehicle 1 may be equipped with a residual battery energy sensor for detecting residual battery energy in place of the fuel gauge sensor 9.

### (Main display picture and launcher display picture)

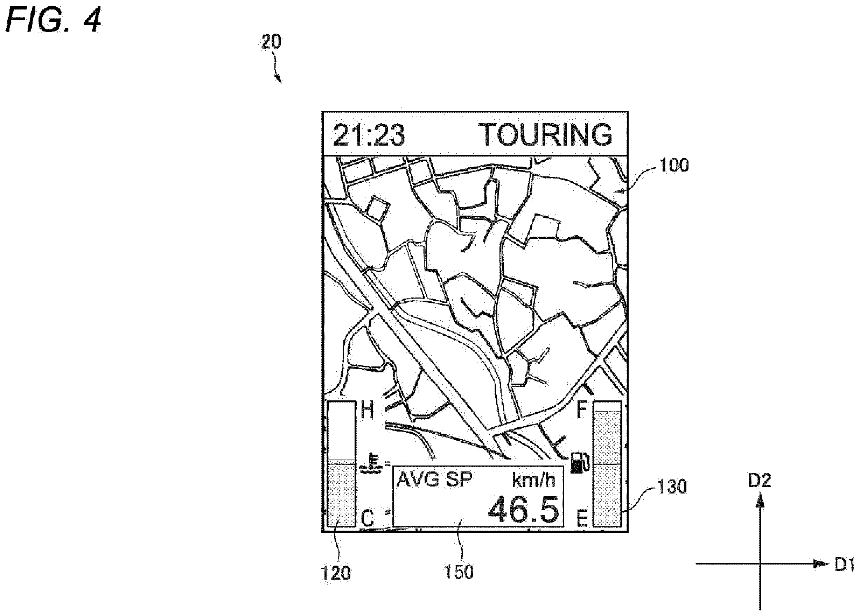

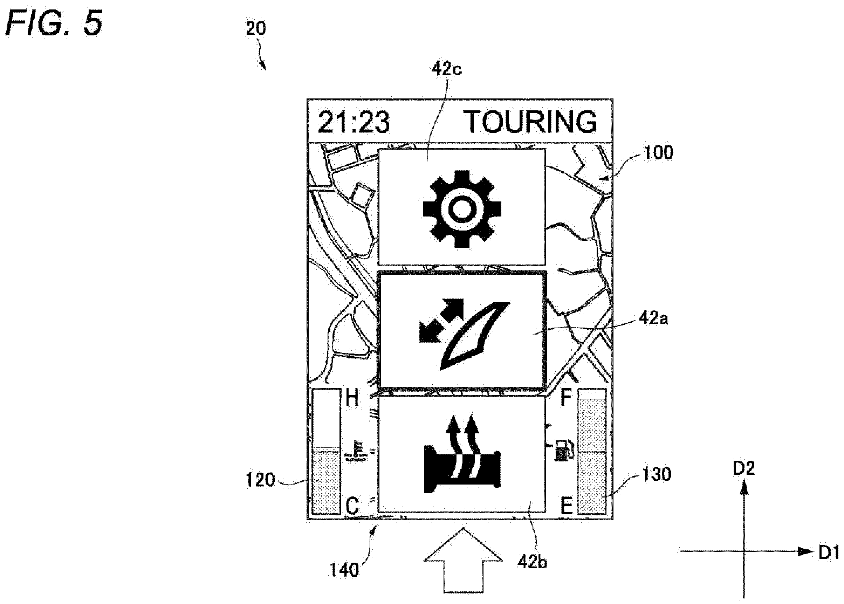

Next, a main display picture 100 and a launcher display picture 140 to be displayed on a screen of the display unit 20 will be described below with reference to Figs. 4 and 5. Fig. 4 shows an example main display picture 100 displayed on the screen of the display unit 20. Fig. 5 shows an example of a main display picture 100 and a launcher display picture 140 displayed on the screen of the display unit 20.

In the following description, reference may be made to a D1 direction and a D2 direction of the screen of the display unit 20 when necessary. The D1 direction and the D2 direction are perpendicular to each other. The D1 direction may or may not be parallel with the left-right direction of the vehicle 1 (see Fig. 1). The D2 direction includes a +D2 direction (indicated by an arrow) and a -D2 direction that is opposite to the D2 direction. In the following description, the control unit 24 is configured to control the display system 2.

First, a description will be made of the main display picture 100 shown in Fig. 4. The meter display picture 100 is an initial picture to be displayed on the screen of the display unit 20. The control unit 24 displays a main display picture 100 on the screen of the display unit 20 in a first display mode. The main display picture 100 may include running information of the vehicle 1 and infotainment information (e.g., map information, musical information, message information, or weather information) transmitted from the portable terminal 30. In the example shown in Fig. 4, map information as an example of infotainment information is displayed in the main display picture 100. Furthermore, a coolant temperature meter 120 indicating a temperature of coolant, a residual fuel meter 130 indicating a residual fuel amount for the drive source 10, an average speed meter 150 indicating an average speed of the vehicle 1 as examples of running information of the vehicle 1 are displayed in the main display picture 100.

If the rider pushes the enter button 32 of the handle switch 3 only once, as shown in Fig. 5 a main display picture 100 and a launcher display picture 140 are displayed on the screen of the display unit 20. That is, the control unit 24 switches the display mode of the display unit 20 from the first display mode shown in Fig. 4 to a second display mode shown in Fig. 5 in response to one short push operation on the enter button 32 which is performed by the rider. In the second display mode of the display unit 20, a main display picture 100 and a launcher display picture 140 are displayed on the display unit 20 as shown in Fig. 5.

When the display mode of the display unit 20 is switched from the first display mode shown in Fig. 4 to the second display mode shown in Fig. 5, the launcher display picture 140 slides into the main display picture 100 in the D1 direction. The slide-in operation of the launcher display picture 140 allows the rider to immediately recognize the switching of the display mode of the display unit 20 from the first display mode to the second display mode. The rider can immediately recognize that the display mode of the display unit 20 has been switched from the first display mode to the second display mode. The slide-in direction of the launcher display picture 140 may be the D2 direction.

When the display mode of the display unit 20 is switched from the first display mode to the second display mode, as shown in Figs. 4 and 5, the launcher display picture 140 is superimposed on the main display picture 100 such that the display positions of the coolant temperature meter 120 and the residual fuel meter 130 remain the same. On the other hand, all of the average speed meter 150 and most of the map image (map information) are hidden by the launcher display picture 140.

The coolant temperature meter 120 and the residual fuel meter 130 may be erased from the main display picture 100 when the launcher display picture 140 is superimposed on the main display picture 100.

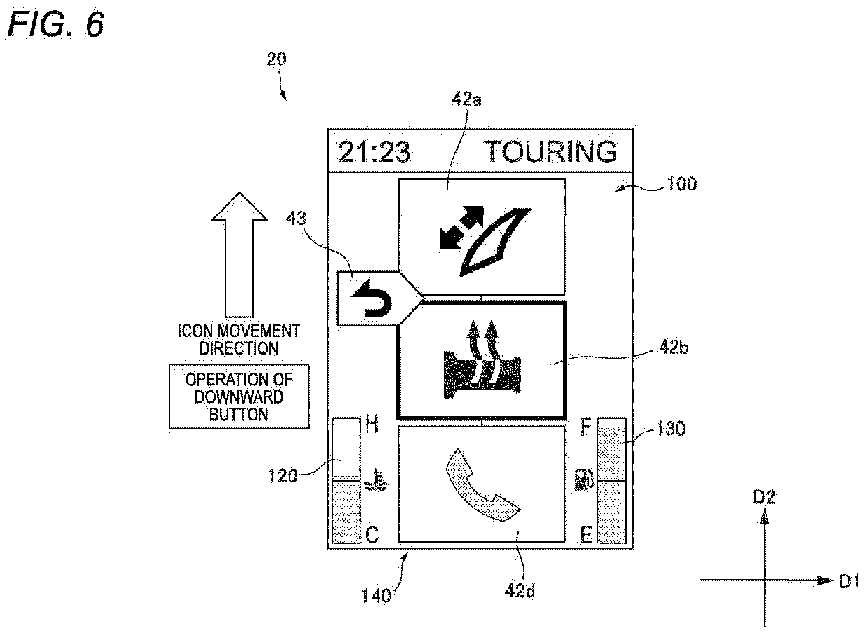

Furthermore, when the display mode of the display unit 20 is switched from the first display mode to the second display mode, the visual aspect of the main display picture 100 may be changed such that the launcher display picture 140 is emphasized. More specifically, the visual aspect (e.g., brightness, hue, lightness, chroma, or transparency) of the map image displayed in the main display picture 100 may be changed such that the launcher display picture 140 is emphasized. For example, the control unit 24 may emphasize the launcher display picture 140 by making the display color of the map image displayed in the main display picture 100 lighter or erasing the map image from the main display picture 100 (see Fig. 6, for example). In the second display mode, the visibility of the launcher display picture 140 is increased because it is emphasized. In each of main display pictures 100 shown in the drawings following Fig. 6, the map image is erased from the main display picture 100 to emphasize the launcher display picture 140.

### (Icons in launcher display image)

As shown in Fig. 5, three icons are displayed in the launcher display picture 140 so as to be arranged in the D2 direction. Each of the plural icons displayed in the launcher display picture 140 is associated with a function of the portable terminal 30 or a function of the vehicle 1. A function of the vehicle 1 or the portable terminal 30 can be changed by the rider's icon operation. An illustration or character information is shown on each icon. The plural icons displayed in the launcher display picture 140 are associated with different functions.

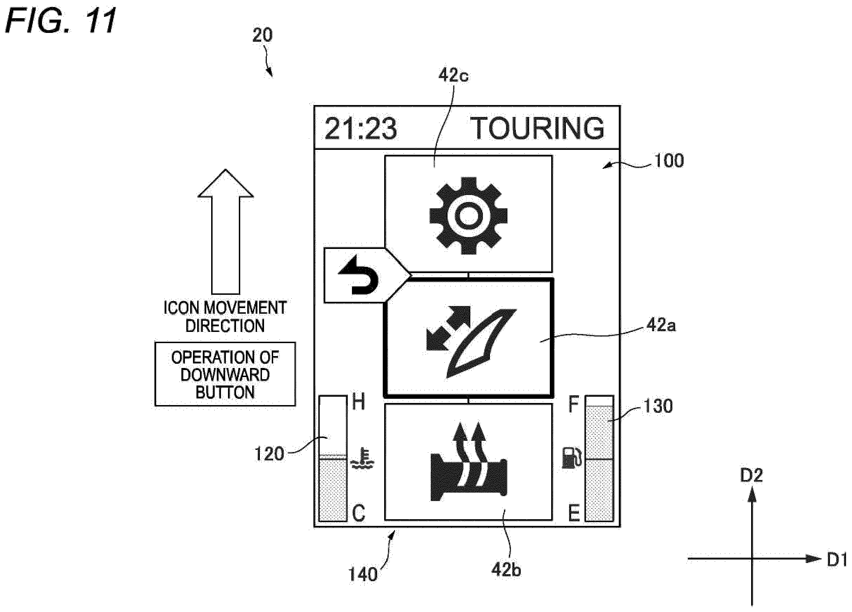

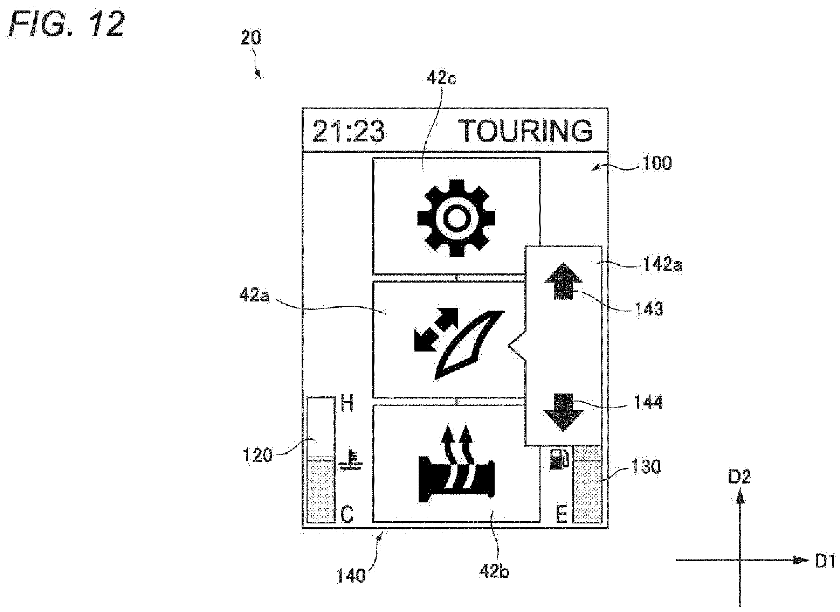

Three icons 42a-42c are arranged in the D2 direction in the launcher display picture 140 shown in Fig. 5. The icon 42a is an icon for the height adjustment of the windscreen 210 (see Fig. 1) of the vehicle 1. The icon 42b is an icon for the temperature adjustment of grip heaters of the vehicle 1. The icon 42c is an icon for various settings of the vehicle 1. For example, if the enter button 32 of the handle switch 3 is operated by the rider in a state that the icon 42a is selected as shown in Fig. 5 or 11, a height adjustment window 142a is displayed on the display unit 20 (see Fig. 12). The windscreen 210 can be elevated when the rider selects and operates an icon 143 displayed in the height adjustment window 142a. On the other hand, the windscreen 210 can be lowered when the rider selects and operates an icon 144.

As shown in Fig. 5, in the launcher display picture 140, the icon 42a (an example of the term "first icon") that is selected by the rider currently is displayed at the center of the launcher display picture 140 in the D2 direction. Furthermore, the currently selected icon 132a is emphasized in such a manner that its visual appearance is changed. For example, as shown in Fig. 5, a circumferential portion of the currently selected icon 42a may be emphasized. For other examples, the icon 42a may be emphasized by increasing its size or changing its display color. By seeing the emphasized icon 42a, the rider can immediately recognize the currently selected (i.e., focused) icon 42a.

Whereas only some (in Fig. 5, three icons 42a-42c) of all icons that can be displayed in the launcher display picture 140 are actually displayed in the launcher display picture 140, the remaining icons are not displayed currently in the launcher display picture 140. Since in this manner only some of all the icons are displayed in the launcher display picture 140, the visibility of the icons displayed in the launcher display picture 140 is increased.

Incidentally, there may occur a case that the number of icons included in the launcher display picture 140 varies depending on the kind of the vehicle 1 in which the display system 2 is installed. Even in such a case, since only some (in this example, three icons) of all the icons are displayed in the launcher display picture 140, it is not necessary to alter the layout of the launcher display picture 140 for each kind of the vehicle 1.

### (Movement of icons display in launcher display picture)

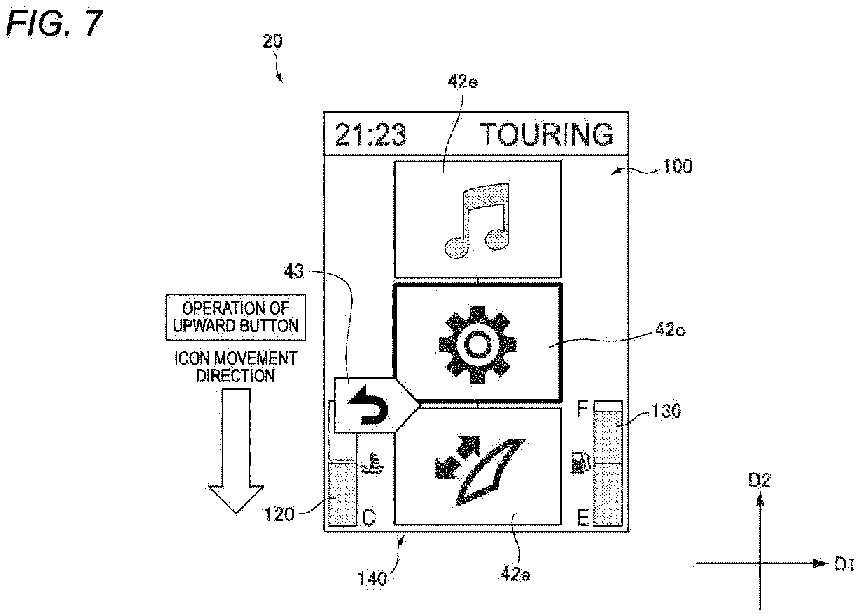

Next, how icons displayed in the launcher display picture 140 are moved will be described with reference to Figs. 6 and 7. Fig. 6 shows how icons displayed in the launcher display picture 140 are moved in the +D2 direction from the state shown in Fig. 5. Fig. 7 shows how icons displayed in the launcher display picture 140 are moved in the -D2 direction from the state shown in Fig. 5.

First, the control unit 24 receives an operation signal corresponding to an operation performed by the rider on the handle switch 3 from the handle switch 3 via the meter unit 6. The control unit 24 is configured to thereafter change the icons finally displayed in the launcher display picture 140 by moving the icons displayed in the launcher display picture 140 in the +D2 direction or the -D2 direction according to the received operation signal. In particular, the control unit 24 moves the icons in the +D2 direction in response to an operation performed by the rider on the downward button 34 and moves the icons in the -D2 direction in response to an operation performed by the rider on the upward button 3.

Referring to Figs. 5 and 6, if the downward button 34 of the handle switch 3 is operated by the rider in a state that the icon 42a is selected currently, the icon selected by the rider currently is switched from the icon 42a to the icon 42b. In this case, as shown in Fig. 6, the icons displayed in the launcher display picture 140 are moved in the +D2 direction. In particular, whereas the icon 42c shown in Fig. 5 disappears from the launcher display picture 140, an icon 42d (see Fig. 6) for the telephone function of the portable terminal 30 appears in the launcher display picture 140. Furthermore, the icon 42b comes to be emphasized and located at the center of the launcher display picture 140 in the D2 direction as an icon newly selected by the rider.

If the upward button 33 or the downward button 34 of the handle switch 3 is pushed by the rider, the control unit 24 displays a back button 43 in the launcher display picture 140 for the first time. That is, a condition that the upward button 33 or the downward button 34 has been operated is a condition for appearance of the back button 43. The back button 43 is displayed between the icons 42a and 42b in the launcher display picture 140. The back button 43 is a button for changing the layer of the launcher display picture 140 or the display mode of the display unit 20. The functions of the back button 43 will be described later.

In the launcher display picture 140 shown in Fig. 6, the icon 42b is an icon (an example of the term "first icon") that is selected by the rider currently. The icon 42a is an icon (an example of the term "second icon") that was selected by the rider last time. The icon 42d is an icon (an example of the term "third icon") to be selected by the rider next time as long as the rider continues to operate the downward button 34. That is, in the launcher display picture 140, the currently selected icon 42b, the icon 42a that was selected last time, the icon 42d to be selected next time, and the back button 43 that is located adjacent to the icon 42b are displayed so as to be arranged in the D2 direction. The back button 43 is located between the currently selected icon 42b and the icon 42a that was selected last time. In particular, the back button 43 is displayed in the launcher display picture 140 so as to be located adjacent to the top edge of the icon 42b in response to the operation made by the rider on the downward button 34.

Referring to Figs. 5 and 7, if the upward button 33 of the handle switch 3 is operated by the rider in a state that the icon 42a is selected currently, the icon selected by the rider currently is switched from the icon 42a to the icon 42c. In this case, as shown in Fig. 7, the icons displayed in the launcher display picture 140 are moved in the -D2 direction. In particular, whereas the icon 42b shown in Fig. 5 disappears from the launcher display picture 140, an icon 42e (see Fig. 7) appears in the launcher display picture 140. The icon 42e is an icon that is correlated with musical pieces to be provided by the portable terminal 30. Furthermore, the icon 42c comes to be emphasized and located at the center of the launcher display picture 140 in the D2 direction as an icon newly selected by the rider. A back button 43 is displayed between the icons 42a and 42c in the launcher display picture 140.

In the launcher display picture 140 shown in Fig. 7, the icon 42c is an icon (an example of the term "first icon") that is selected by the rider currently. The icon 42a is an icon (an example of the term "second icon") that was selected by the rider last time. The icon 42e is an icon (an example of the term "third icon") to be selected by the rider next time as long as the rider continues to operate the upward button 33. That is, in the launcher display picture 140, the currently selected icon 42c, the icon 42a that was selected last time, the icon 42e to be selected next time, and the back button 43 that is located adjacent to the icon 42c are displayed so as to be arranged in the D2 direction. The back button 43 is located between the currently selected icon 42c and the icon 42a that was selected last time. In particular, the back button 43 is displayed in the launcher display picture 140 so as to be located adjacent to the bottom edge of the icon 42c in response to the operation made by the rider on the upward button 33.

As described above, three icons, that is, an icon selected by the rider currently, an icon that was selected by the rider last time, and an icon to be selected by the rider next time, are displayed in the launcher display picture 140. Furthermore, the icon selected currently is located between the icon that was selected last time and the icon to be selected next time in the D2 direction. This allows the rider to recognize, intuitively, the icon selected currently, the icon that was selected last time, and the icon to be selected next time, whereby the operability of the display system 2 is increased.

Furthermore, in the examples shown in Figs. 6 and 7, the back button 43 is displayed so as to be always located adjacent to the currently selected icon. This allows the rider to select the back button 43 by performing a small amount of operation on the handle switch 3. Furthermore, the back button 43 is located between the currently selected icon and the icon that was selected last time. This makes it possible to prevent such a situation that the back button 43 is always selected as three icons are moved in the +D2 direction or the -D2 direction in response to operations of the rider. For example, in the example shown in Fig. 6, since the back button 43 is located between the icons 42b and 42a, such a situation can be prevented that the back button 43 is selected before selection of the icon 42d.

### (Back button)

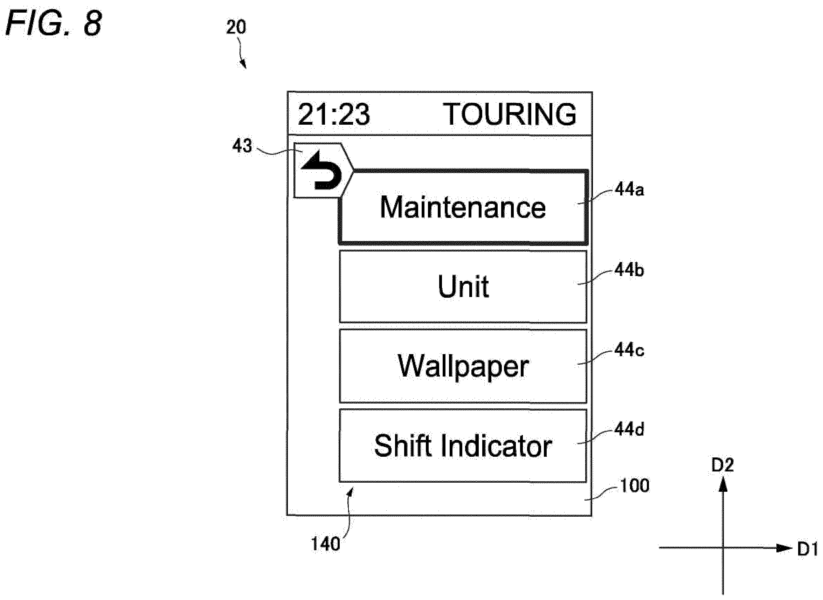

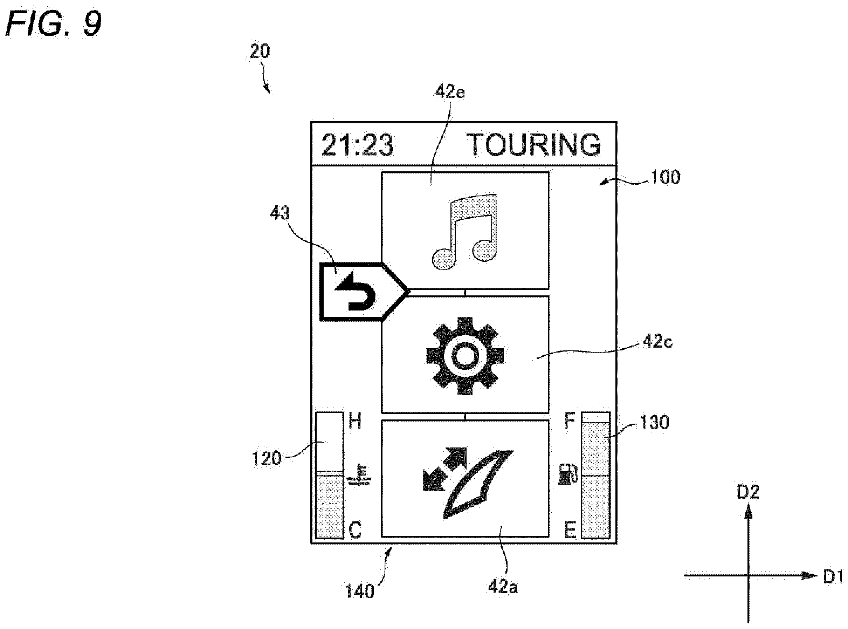

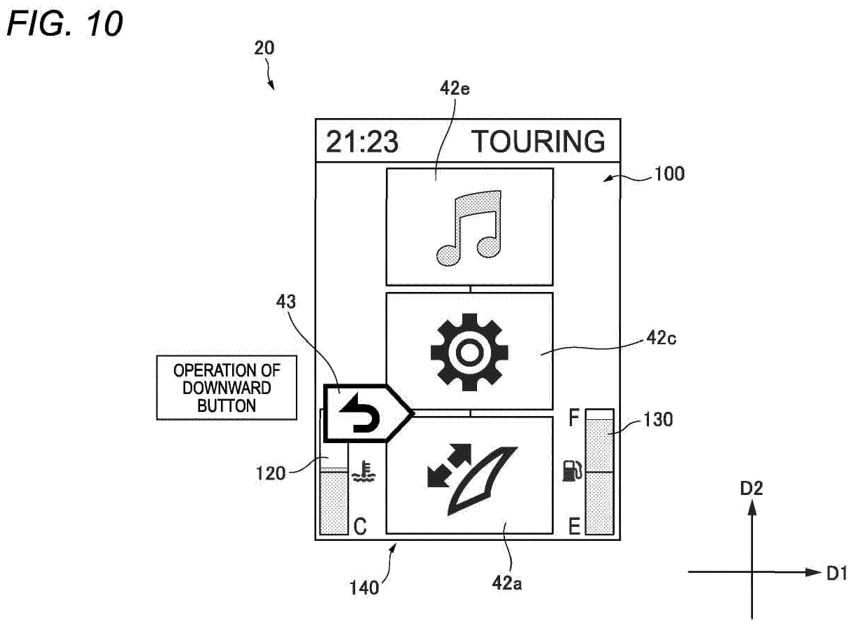

Next, the functions of the back button 43 will be described below with reference to Figs. 7-10. Fig. 8 shows example icons 44a to 44d that relate to vehicle settings and are correlated with the icon 42c. Fig. 9 shows a state that a back button 43 displayed in the launcher display picture 140 is selected. Fig. 10 shows a state that the back button 43 has been selected by an operation on the downward button 34.

As shown in Figs. 7 and 8, when the enter button 32 is operated by the rider in a state that the icon 42c is selected currently, a launcher display picture 140 in which icons 44a to 44d relating to vehicle settings are arranged in the D2 direction is displayed on the screen of the display unit 20. The icons 44a to 44d are icons that belong to a layer that is lower than the icon 42c. That is, the layer of the launcher display picture 140 shown in Fig. 8 is one level lower than that of the launcher display picture 140 shown in Fig. 7. As shown in Fig. 8, the back button 43 is disposed so as to be always adjacent to the icon 44a that is selected by the rider currently.

If the enter button 32 is pushed for a short time in a state that the back button 43 shown in Fig. 8 is selected by the rider, a launcher display picture 140 shown in Fig. 9 is displayed. In this manner, the control unit 24 changes the layer of the launcher display picture 140 (see Fig. 8) to the layer (see the launcher display picture 140 shown in Fig. 9) that is one level higher than its current layer in response to a short push operation on the enter button 32 in a state that the back button 43 is selected currently. In the following description, the layer of the launcher display picture 140 shown in Fig. 7 or 9 may be referred to as a "first layer" and the layer of the launcher display picture 140 shown in Fig. 8 may be referred to as a "second layer."

On the other hand, if the enter button 32 is operated by the rider for a long time in a state that the back button 43 shown in Fig. 8 is selected by the rider, the launcher display picture 140 is erased and the main display picture 100 shown in Fig. 4 is displayed on the screen of the display unit 20. In other words, if the enter button 32 is operated by the rider for a long time in a state that the back button 43 shown in Fig. 8 is selected by the rider, the display mode of the display unit 20 is switched from the second display mode to the first display mode (see Fig. 4). When the display mode of the display unit 20 is switched from the second display mode to the first display mode, the launcher display picture 140 may be slid out from the main display picture 100 in the D1 direction.

If the enter button 32 is operated by the rider for a short time in a state that the back button 43 displayed in the launcher display picture 140 shown in Fig. 7 is selected by the rider, the display mode of the display unit 20 is switched from the second display mode to the first display mode (see Fig. 4). Also in this case, the launcher display picture 140 may be slid out from the main display picture 100 in the D1 direction. By seeing the slide-out operation of the launcher display picture 140, the rider can immediately recognize the switching of the display mode of the display unit 20 from the second display mode to the first display mode. The launcher display picture 140 may be slid out in the D2 direction.

As described above, the back button 43 is configured to change the layer of a launcher display picture 140 to a layer that is higher than its current layer or to switch the display mode of the display unit 20 from the second display mode to the first display mode. More specifically, in case where the layer of a launcher display picture 140 is the second layer, the back button 43 is configured to change the layer of the launcher display picture 140 from the second layer to the first layer in response to a short push operation on the enter button 32. In other words, in case where the layer of a launcher display picture 140 is an Nth layer (N > 2), the back button 43 is configured to change the layer of the launcher display picture 140 from the Nth layer to the (N - 1)th layer in response to a short push operation on the enter button 32. On the other hand, the back button 43 is configured to switch the display mode of the display unit 20 from the second display mode to the first display mode in response to a long push operation on the enter button 32.

In case where the layer of a launcher display picture 140 is the first layer as shown in Fig. 7 or 9, the back button 43 is configured to switch the display mode of the display unit 20 from the second display mode to the first display mode in response to a short push operation on the enter button 32.

In case where the display mode of the display unit 20 is the first display mode (i.e., no launcher display picture 140 is displayed on the display unit 20), an expression that the layer of a launcher display picture 140 is the highest layer can be used to describe this state. That is, no launcher display picture 140 is displayed on the screen of the display unit 20 in a state that the layer of a launcher display picture 140 is the highest layer.

When as shown in Fig. 9 the layer of the launcher display picture 140 has been changed from the second layer to the first layer with an operation on the back button 43, the back button 43 is displayed in the launcher display picture 140 in a state that it has been selected first (i.e., in a state that the back button 43 has been focused). Thus, the rider can change the layer of the launcher display picture 140 further by merely performing a short push operation on the enter button 32. In the example shown in Fig. 9, the display mode of the display unit 20 can be switched to the first display mode by the rider's operating the enter button 32 only once for a short time. Whenever the layer of a launcher display picture 140 has been changed to a one level higher layer with an operation on the back button 43, the back button 43 may be located adjacent to the top-left corner of an icon that is located at the center of the launcher display picture 140.

As shown in Fig. 10, if the rider operates the downward button 34 in the state shown in Fig. 7, the back button 43 is selected before the icon 42a. In this case, the icons displayed in the launcher display picture 140 are not moved in the +D2 direction because the icon 42a is not selected. The icon 42a is selected (see Fig. 11) if the rider operates the downward button 34 again in the state shown in Fig. 10. In this case, the ions displayed in the launcher display picture 140 are moved in the +D2 direction. In particular, the icon 42b appears in the launcher display picture 140 whereas the icon 42e shown in Fig. 10 disappears from the launcher display picture 140. Furthermore, the icon 42a is emphasized as an icon currently selected by the rider and is located at the center of the launcher display picture 140 in the D2 direction. The back button 43 is displayed so as to be located between the icons 42a and 42c and adjacent to the icon 42a.

According to the embodiment, the display mode of the display unit 20 can be switched from to the first display mode in which the main display picture 100 is displayed to the second display mode in which the launcher display picture 140 is displayed in response to one short push operation performed by the rider on the enter button 32. Furthermore, the layer of a launcher display picture 140 can be changed to a one level higher layer or the display mode of the display unit 20 can be switched from the second display mode to the first display mode in response to a short push operation performed on the enter button 32 in a state that the back button 43 is selected currently. Thus, the usability of the display system 2 can be increased.

In particular, according to the embodiment, since the layer of a launcher display picture 140 or the display mode of the display unit 20 can be changed with an operation on the back button 43, the display system 2 can be increased in operability and convenience even if the handle switch 3 is not equipped with a home button. The overall size of the handle switch 3 can be reduced because it is not necessary to equip the handle switch 3 with a physical home button.

In the embodiment, if the handle switch 3 has not been operated by the rider for a certain time (e.g., 5 sec) in the second display mode, the display mode of the display unit 20 may be changed automatically from the second display mode to the first display mode. In this case, the operability of the display system 2 is increased because the display mode of the display unit 20 is changed automatically from the second display mode to the first display mode if the handle switch 3 has not been operated for the certain time.

Although in the above description both of the launcher display picture 140 and the main display picture 100 are displayed on the screen of the display unit 20 when the display mode of the display unit 20 has been switched from the first display mode to the second display mode, the embodiment is not limited to that case. For example, only the launcher display picture 140 may be displayed on the screen of the display unit 20 when the display mode of the display unit 20 has been switched from the first display mode to the second display mode.

Furthermore, in the embodiment, there are no particular limitations on the depth of layers of the launcher display picture 140; for example, the launcher display picture 140 may have N layers (N ≥ 2).

### DESCRIPTION OF REFERENCE NUMERALS

1: Straddled vehicle (vehicle)
2: Display system
3: Handle switch
4: Vehicle control unit
5: Vehicle speed sensor
6: Meter unit
7: Drive source rotation speed sensor
8: Coolant temperature sensor
9: Fuel gauge sensor
10: Drive source
20: Display unit
22: Communication unit
23: Input/output interface
24: Control unit
30: Portable terminal
32: Enter button
33: Upward button
34: Downward button
39: Housing
40: Wireless base station
42a, 42b, 42c, 42d, 42e: Icon
43: Back button
44: Wireless base station
44a, 44b, 44c, 44d: Icon
50: IP network
60: Tachometer
62: Speedometer
70: External server
100: Main display picture
120: Coolant temperature meter
130: Residual fuel meter
140: Launcher display picture
150: Average speed meter

## Claims

1. A display system (2) which is to be installed in a straddled vehicle (1), the display system (2) comprising:
a display unit (20); and
wherein the display system (2) is configured to:
switch a display mode of the display unit (20) from a first display mode to a second display mode in response to an operation performed by a rider on a handle switch (3) of the vehicle (1), the handle switch (3) consists of an upward button (33), a downward button (34), and an enter button (32) that is disposed between the upward button (33) and the downward button (34);
display a main display picture (100) on the display unit (20) in the first display mode; and
display at least a launcher display picture (140) on the display unit (20) in the second display mode,
wherein in the launcher display picture (140), at least some of a plurality of icons (42a to 42e) are displayed side by side in a certain direction (D2), wherein each of the icons (42a to 42e) is associated with a function of a portable terminal (30) or a function of the vehicle (1),
wherein in the launcher display picture (140), a first icon that is currently selected by the rider, a second icon that was selected by the rider last time, and a third icon being arranged to be selected by the rider next time as long as the rider continues to operate the downward button (34) or the upward button (33) of the handle switch (3), are displayed in the certain direction (D2),
wherein the first icon is located between the second icon and the third icon, and
wherein the display system (2) is configured to change a layer of the launcher display picture (140) to a layer that is higher than its current layer or switch the display mode of the display unit (20) from the second display mode to the first display mode, in response to an operation that has been performed by the rider on the handle switch (3), **characterized by**
further comprising a communication unit (22) which is communicably connectable to the portable terminal (30), wherein the display system is configured to:
if the upward button (33) or the downward button (34) of the handle switch (3) is pushed by the rider for the first time, display a back button (43) in the launcher display picture (140), wherein the back button (43) is displayed adjacent to the first icon between the first icon and the second icon in the certain direction;
select the back button (43) by using the downward button (34) if the currently selected icon was selected using the upward button (33) or by using the upward button (33) if the currently selected icon was selected using the downward button (34); and
change the layer of the launcher display picture (140) to a layer that is one level higher than its current layer or switch the display mode of the display unit from the second display mode to the first display mode in response to a push operation performed by the rider on the handle switch (3) in a state that the back button (43) is currently selected.

2. The display system (2) according to claim 1, **characterized in that** the display system (2) is configured to switch the display mode of the display unit (20) from the first display mode to the second display mode in response to one operation performed by the rider on the handle switch (3).

3. The display system (2) according to claim 1 or 2, **characterized in that** the display system (2) is configured to display the launcher display picture (140) and the main display picture (100) on the display unit (20) in the second display mode; and
the display system (2) is configured to change a visual aspect of the main display picture (100) such that the launcher display picture (100) is emphasized, when the display mode is switched from the first display mode to the second display mode.

4. The display system (2) according to any one of claims 1 to 3, **characterized in that** the plurality of icons (42a to 42e) comprise one or more icons that are displayed in the launcher display picture (140) and one or more icons that are not displayed in the launcher display picture (140).

5. The display system (2) according to any one of claims 1 to 4, **characterized in that** the display system (2) is configured to change the at least some of the icons displayed in the launcher display picture (140) by moving the at least some of the icons in the certain direction (D2) in response to an operation performed by the rider on the handle switch (3).

6. The display system (2) according to claim 5, **characterized in that** the display system (2) is configured to display the back button (43) in the launcher display picture (140) so as to be located between the first icon and the second icon while the at least some of the icons are moved in the certain direction (D2).

7. The display system (2) according to any one of claims 1 to 6, **characterized in that** the display system (2) is configured to emphasize the first icon that is currently selected by the rider.

8. The display system (2) according to any one of claims 1 to 7, **characterized in that** the display system (2) is configured to:
change the layer of the launcher display picture (140) to a layer that is one level higher than its current layer in response to a short push operation performed by the rider on the handle switch (3) in a state that the back button (43) is currently selected; and
switch the display mode of the display unit (20) from the second display mode to the first display mode in response to a long push operation performed by the rider on the handle switch (3) in a state that the back button (43) is currently selected.

9. The display system (2) according to any one of claims 1 to 8, **characterized in that** the display system (2) is configured to display the back button (43) in the launcher display picture (140) in a state that the back button (43) has been firstly selected when the layer of the launcher display picture (140) has been changed to a layer that is one level higher than its current layer.

10. The display system (2) according to any one of claims 1 to 9, **characterized in that** the display system (2) is configured to slide the launcher display picture (140) into the main display picture (100) when the display mode is switched from the first display mode to the second display mode.

11. The display system (2) according to any one of claims 1 to 10, **characterized in that** the display system (2) is configured to slide the launcher display picture (140) out from the main display picture (100), when the display mode is switched from the second display mode to the first display mode.

12. The display system (2) according to any one of claims 1 to 11, **characterized in that** the display system (2) is configured to switch the display mode automatically from the second display mode to the first display mode, when the handle switch (3) has not been operated by the rider for a certain period in the second display mode.

13. The display system (2) according to any one of claims 1 to 12, **characterized in that** the plurality of icons (42a to 42e) are associated with different functions.

14. The display system (2) according to any one of claims 1 to 13, **characterized in that** the main display picture (100) includes infotainment information transmitted from the portable terminal (30).

15. The display system (2) according to any one of claims 1 to 14, **characterized in that** the display system (2) is configured to display the back button (43) in the launcher display picture (140) when the launcher display picture (140) is displayed on the display unit (20) and an upward button (33) or a downward button (34) of the handle switch (3) has been operated by the rider.

16. The display system (2) according to claim 15, **characterized in that** the display system (2) is configured to:
display the back button (43) in the launcher display picture (140) such that the back button (43) is located adjacent to a bottom edge of the first icon, in response to an operation performed by the rider on the upward button (33); and
display the back button (43) in the launcher display picture (140) such that the back button (43) is located adjacent to a top edge of the first icon, in response to an operation performed by the rider on the downward button (34).

17. A straddled vehicle (1) comprising the display system (2) according to any one of claims 1 to 16.

18. The straddled vehicle (1) according to claim 17, wherein the display unit (20) is disposed between a tachometer (60) and a speedometer (62).

## Patentansprüche

1. Ein Anzeigesystem (2), das in einem Spreiz-Sitz-Fahrzeug (1) installiert werden soll, das Anzeigesystem (2) umfasst:
eine Anzeigeeinheit (20); und
wobei das Anzeigesystem (2) konfiguriert ist, zum:
Umschalten eines Anzeigemodus der Anzeigeeinheit (20) von einem ersten Anzeigemodus in einen zweiten Anzeigemodus als Reaktion auf eine Betätigung, die von einem Fahrer an einem Griffschalters (3) des Fahrzeugs (1) durchgeführt ist, der Griffschalter (3) besteht aus einer Aufwärtstaste (33), einer Abwärtstaste (34) und einer Eingabetaste (32), die zwischen der Aufwärtstaste (33) und der Abwärtstaste (34) angeordnet ist;
Anzeigen eines Hauptanzeigebildes (100) auf der Anzeigeeinheit (20) im ersten Anzeigemodus; und
Anzeigen von zumindest einem Startanzeigebildes (140) auf der Anzeigeeinheit (20) im zweiten Anzeigemodus,
wobei in dem Startanzeigebild (140) zumindest einige einer Mehrzahl von Symbolen (42a bis 42e) nebeneinander in einer bestimmten Richtung (D2) angezeigt werden,
wobei jedes der Symbole (42a bis 42e) einer Funktion eines tragbaren Endgeräts (30) oder einer Funktion des Fahrzeugs (1) zugeordnet ist,
wobei in dem Startanzeigebild (140) ein erstes Symbol, das gegenwärtig von dem Fahrer ausgewählt ist, ein zweites Symbol, das von dem Fahrer das letzte Mal ausgewählt wurde, und ein drittes Symbol, das so angeordnet ist, dass es von dem Fahrer das nächste Mal ausgewählt wird, solange der Fahrer fortfährt, die Abwärtstaste (34) oder die Aufwärtstaste (33) des Griffschalters (3) zu betätigen, in der bestimmten Richtung (D2) angezeigt werden,
wobei das erste Symbol zwischen dem zweiten Symbol und dem dritten Symbol angeordnet ist, und
wobei das Anzeigesystem (2) konfiguriert ist, um eine Ebene des Startanzeigebildes (140) auf eine Ebene ändert, die höher ist als seine aktuelle Ebene, oder den Anzeigemodus der Anzeigeeinheit (20) von dem zweiten Anzeigemodus auf den ersten Anzeigemodus umzuschalten, in Reaktion auf eine Betätigung, die von dem Fahrer an dem Griffschalter (3) durchgeführt wurde, **gekennzeichnet durch**
in dem es weiterhin eine Kommunikationseinheit (22) umfasst, die kommunikativ mit einem tragbaren Endgerät (30) verbindbar ist, wobei das Anzeigesystem konfiguriert ist, zum:
wenn die Aufwärtstaste (33) oder die Abwärtstaste (34) des Griffschalters (3) vom Fahrer zum ersten Mal gedrückt wird, Anzeigen einer Zurücktaste (43) in dem Startanzeigebild (140), wobei die Zurücktaste (43) neben dem ersten Symbol zwischen dem ersten Symbol und dem zweiten Symbol in der bestimmten Richtung angezeigt wird;
Auswählen der Zurücktaste (43) mit der Abwärtstaste (34), wenn das aktuell ausgewählte Symbol mit der Aufwärtstaste (33) ausgewählt wurde, oder mit der Aufwärts-Taste (33), wenn das aktuell ausgewählte Symbol mit der Abwärtstaste (34) ausgewählt wurde; und
Ändern der Ebene des Startanzeigebildes (140) auf eine Ebene, die eine Ebene höher ist als seine aktuelle Ebene, oder Umschalten des Anzeigemodus der Anzeigeeinheit vom zweiten Anzeigemodus auf den ersten Anzeigemodus, wenn der Fahrer den Griffschalter (3) drückt, während die Zurücktaste (43) gerade ausgewählt ist.

2. Das Anzeigesystem (2) gemäß Anspruch 1, **dadurch gekennzeichnet, dass** das Anzeigesystem (2) konfiguriert ist, um den Anzeigemodus der Anzeigeeinheit (20) vom ersten Anzeigemodus auf den zweiten Anzeigemodus als Reaktion auf eine Betätigung, die vom Fahrer am Griffschalter (3) ausgeführt ist, umzuschalten.

3. Das Anzeigesystem (2) gemäß Anspruch 1 oder 2, **dadurch gekennzeichnet, dass** das Anzeigesystem (2) konfiguriert ist, um das Startanzeigebild (140) und das Hauptanzeigebild (100) auf der Anzeigeeinheit (20) im zweiten Anzeigemodus anzuzeigen; und
das Anzeigesystem (2) konfiguriert ist, um einen visuellen Aspekt des Hauptanzeigebildes (100) zu ändern, so dass das Startanzeigebild (100) hervorgehoben wird, wenn der Anzeigemodus von dem ersten Anzeigemodus zu dem zweiten Anzeigemodus umgeschaltet wird.

4. Das Anzeigesystem (2) gemäß irgendeinem der Ansprüche 1 bis 3, **dadurch gekennzeichnet, dass** die Mehrzahl von Symbolen (42a bis 42e) ein oder mehrere Symbole, die im Startanzeigebild (140) angezeigt werden, und ein oder mehrere Symbole, die nicht im Startanzeigebild (140) angezeigt werden, umfasst.

5. Das Anzeigesystem (2) gemäß irgendeinem der Ansprüche 1 bis 4, **dadurch gekennzeichnet, dass** das Anzeigesystem (2) konfiguriert ist, um zumindest einige der im Startanzeigebild (140) angezeigten Symbole zu ändern, indem es die zumindest einige der Symbole als Reaktion auf eine vom Fahrer am Griffschalter (3) ausgeführte Betätigung in die bestimmte Richtung (D2) bewegt.

6. Das Anzeigesystem (2) gemäß Anspruch 5, **dadurch gekennzeichnet, dass** das Anzeigesystem (2) konfiguriert ist, um die Zurücktaste (43) in dem Startanzeigebild (140) anzuzeigen, so dass sie sich zwischen dem ersten Symbol und dem zweiten Symbol befindet, während zumindest einige der Symbole in die bestimmte Richtung (D2) bewegt werden.

7. Das Anzeigesystem (2) gemäß irgendeinem der Ansprüche 1 bis 6, **dadurch gekennzeichnet, dass** das Anzeigesystem (2) konfiguriert ist, um das erste Symbol, das gerade vom Fahrer ausgewählt ist, hervorzuheben.

8. Das Anzeigesystem (2) gemäß irgendeinem der Ansprüche 1 bis 7, **dadurch gekennzeichnet, dass** das Anzeigesystem (2) konfiguriert ist, zum:
Ändern der Ebene des Startanzeigebildes (140) in eine Ebene, die eine Ebene höher ist als die aktuelle Ebene, als Reaktion auf einen kurzen Druck des Fahrers auf den Griffschalter (3) in einem Zustand, in dem die Zurücktaste (43) gerade ausgewählt ist; und
Umschalten des Anzeigemodus der Anzeigeeinheit (20) von dem zweiten Anzeigemodus auf den ersten Anzeigemodus als Reaktion auf einen langen Druck des Fahrers auf den Griffschalter (3) in einem Zustand, in dem die Rücktaste (43) gerade ausgewählt ist.

9. Das Anzeigesystem (2) gemäß irgendeinem der Ansprüche 1 bis 8, **dadurch gekennzeichnet, dass** das Anzeigesystem (2) konfiguriert ist, um die Zurücktaste (43) in dem Startanzeigebild (140) in einem Zustand anzuzeigen, in dem die Zurücktaste (43) zuerst ausgewählt wurde, wenn die Ebene des Startanzeigebildes (140) auf eine Ebene geändert wurde, die eine Ebene höher ist als seine aktuelle Ebene.

10. Das Anzeigesystem (2) gemäß irgendeinem der Ansprüche 1 bis 9, **dadurch gekennzeichnet, dass** das Anzeigesystem (2) konfiguriert ist, um das Startanzeigebild (140) in das Hauptanzeigebild (100) zu schieben, wenn der Anzeigemodus von dem ersten Anzeigemodus in den zweiten Anzeigemodus umgeschaltet wird.

11. Das Anzeigesystem (2) gemäß irgendeinem der Ansprüche 1 bis 10, **dadurch gekennzeichnet, dass** das Anzeigesystem (2) konfiguriert ist, um das Startanzeigebild (140) aus dem Hauptanzeigebild (100) herauszuschieben, wenn der Anzeigemodus vom zweiten Anzeigemodus zum ersten Anzeigemodus umgeschaltet wird.

12. Das Anzeigesystem (2) gemäß irgendeinem der Ansprüche 1 bis 11, **dadurch gekennzeichnet, dass** das Anzeigesystem (2) konfiguriert ist, um den Anzeigemodus automatisch vom zweiten Anzeigemodus auf den ersten Anzeigemodus umzuschalten, wenn der Griffschalter (3) im zweiten Anzeigemodus eine bestimmte Zeit lang nicht vom Fahrer betätigt wurde.

13. Das Anzeigesystem (2) gemäß irgendeinem der Ansprüche 1 bis 12, **dadurch gekennzeichnet, dass** die Mehrzahl der Symbole (42a bis 42e) unterschiedlichen Funktionen zugeordnet sind.

14. Das Anzeigesystem (2) gemäß irgendeinem der Ansprüche 1 bis 13, **dadurch gekennzeichnet, dass** das Hauptanzeigebild (100) Infotainment-Informationen enthält, die von dem tragbaren Endgerät (30) übertragen werden.

15. Das Anzeigesystem (2) gemäß irgendeinem der Ansprüche 1 bis 14, **dadurch gekennzeichnet, dass** das Anzeigesystem (2) konfiguriert ist, um die Rücktaste (43) im Startanzeigebild (140) anzuzeigen, wenn das Startanzeigebild (140) auf der Anzeigeeinheit (20) angezeigt wird und eine Aufwärtstaste (33) oder eine Abwärtstaste (34) des Griffschalters (3) vom Fahrer betätigt wurde.

16. Das Anzeigesystem (2) gemäß Anspruch 15, **dadurch gekennzeichnet, dass** das Anzeigesystem (2) konfiguriert ist, zum:
Anzeigen der Zurücktaste (43) in dem Startanzeigebild (140), so dass die Zurücktaste (43) neben einer unteren Kante des ersten Symbols angeordnet ist, als Reaktion auf eine Betätigung der Aufwärtstaste (33), die von dem Fahrer durchgeführt ist; und
Anzeigen der Zurücktaste (43) im Startanzeigebild (140), so dass die Zurücktaste (43) neben einem oberen Rand des ersten Symbols angeordnet ist, als Reaktion auf eine Betätigung der Abwärtstaste (34), die von dem Fahrer durchgeführt ist.

17. Ein Spreiz-Sitz-Fahrzeug (1), das ein Anzeigesystem (2) gemäß irgendeinem der Ansprüche 1 bis 16 umfasst.

18. Das Spreiz-Sitz-Fahrzeug (1) gemäß Anspruch 17, wobei die Anzeigeeinheit (20) zwischen einem Drehzahlmesser (60) und einem Geschwindigkeitsmesser (62) angeordnet ist.

## Revendications

1. Système d'affichage (2) qui est à installer sur un véhicule à enfourcher (1), le système d'affichage (2) comprenant :
une unité d'affichage (20) ; et
dans lequel le système d'affichage (2) est configuré pour :
commuter un mode d'affichage de l'unité d'affichage (20) d'un premier mode d'affichage vers un deuxième mode d'affichage en réaction à une opération exécutée par un conducteur sur un commutateur au guidon (3) du véhicule (1), le commutateur au guidon (3) est constitué d'un bouton montant (33), d'un bouton descendant (34) et d'un bouton de validation (32) qui est disposé entre le bouton montant (33) et le bouton descendant (34) ;
afficher une image d'affichage principal (100) sur l'unité d'affichage (20) dans le premier mode d'affichage ; et
afficher au moins une image d'affichage de lancer (140) sur l'unité d'affichage (20) dans le deuxième mode d'affichage,
dans lequel l'image d'affichage de lanceur (140), au moins une partie d'une pluralité d'icônes (42a à 42e) sont affichées côte-à-côte dans une certaine direction (D2), dans lequel chacune des icônes (42a à 42e) est associée à une fonction d'un terminal portable (30) ou une fonction du véhicule (1),
dans lequel dans l'image d'affichage de lanceur (140), une première icône qui est couramment sélectionnée par le conducteur, une deuxième icône qui a été sélectionnée par le conducteur la dernière fois, et une troisième icône disposée pour être sélectionnée par le conducteur la prochaine fois tant que le conducteur continue de faire fonctionner le bouton descendant (34) ou le bouton montant (33) du commutateur au guidon (3), sont affichées dans la certaine direction (D2),
dans lequel la première icône est située entre la deuxième icône et la troisième icône, et dans lequel le système d'affichage (2) est configuré pour changer une couche de l'image d'affichage de lanceur (140) en une couche qui est supérieure à sa couche courante ou commuter le mode d'affichage de l'unité d'affichage (20) du deuxième mode d'affichage vers le premier mode d'affichage, en réaction à une opération qui a été exécutée par le conducteur sur le commutateur au guidon (3), **caractérisé par**
une inclusion en outre d'une unité de communication (22) qui est connectable en communication au terminal portable (30), dans lequel le système d'affichage est configuré pour :
si le bouton montant (33) ou le bouton descendant (34) du commutateur au guidon (3) est poussé par le conducteur pour la première fois, afficher un bouton de retour (43) dans l'image d'affichage de lanceur (140), dans lequel le bouton de retour (43) est affiché adjacent à la première icône entre la première icône et la deuxième icône dans la certaine direction ;
sélectionner le bouton de retour (43) en utilisant le bouton descendant (34) si l'icône couramment sélectionnée était sélectionnée au moyen du bouton montant (33) ou en utilisant le bouton montant (33) si l'icône couramment sélectionnée était sélectionnée au moyen du bouton descendant (34) ; et
changer la couche de l'image d'affichage de lanceur (140) en une couche qui se situe un niveau au-dessus de sa couche courante ou commuter le mode d'affichage de l'unité d'affichage du deuxième mode d'affichage vers le premier mode d'affichage en réaction à une opération de pression exécutée par le conducteur sur le commutateur au guidon (3) dans un état où le bouton de retour (43) est couramment sélectionné.

2. Le système d'affichage (2) selon la revendication 1,
**caractérisé en ce que** le système d'affichage (2) est configuré pour commuter le mode d'affichage de l'unité d'affichage (20) du premier mode d'affichage vers le deuxième mode d'affichage en réaction à une opération exécutée par le conducteur sur le commutateur au guidon (3) .

3. Le système d'affichage (2) selon la revendication 1 ou 2, **caractérisé en ce que** le système d'affichage (2) est configuré pour afficher l'image d'affichage de lanceur (140) et l'image d'affichage principal (100) sur l'unité d'affichage (20) dans le deuxième mode d'affichage ; et
le système d'affichage (2) est configuré pour changer un aspect visuel de l'image d'affichage principal (100) de sorte que l'image d'affichage de lanceur (100) soit mise en évidence, lorsque le mode d'affichage est commuté du premier mode d'affichage vers le deuxième mode d'affichage.

4. Le système d'affichage (2) selon l'une quelconque des revendications 1 à 3, **caractérisé en ce que** la pluralité d'icônes (42a à 42e) comprend une ou plusieurs icônes qui sont affichées dans l'image d'affichage de lanceur (140) et une ou plusieurs icônes qui ne sont pas affichées dans l'image d'affichage de lanceur (140).

5. Le système d'affichage (2) selon l'une quelconque des revendications 1 à 4, **caractérisé en ce que** le système d'affichage (2) est configuré pour changer les au moins quelques-unes des icônes affichées dans l'image d'affichage de lanceur (140) en déplaçant les au moins quelques-unes des icônes dans la certaine direction (D2) en réaction à une opération exécutée par le conducteur sur le commutateur au guidon (3).

6. Le système d'affichage (2) selon la revendication 5,
**caractérisé en ce que** le système d'affichage (2) est configuré pour afficher le bouton de retour (43) dans l'image d'affichage de lanceur (140) de sorte à ce qu'il soit situé entre la première icône et la deuxième icône tandis que les au moins quelques-unes des icônes sont déplacées dans la certaine direction (D2).

7. Le système d'affichage (2) selon l'une quelconque des revendications 1 à 6, **caractérisé en ce que** le système d'affichage (2) est configuré pour mettre en évidence la première icône qui est couramment sélectionnée par le conducteur.

8. Le système d'affichage (2) selon l'une quelconque des revendications 1 à 7, **caractérisé en ce que** le système d'affichage (2) est configuré pour :
changer une couche de l'image d'affichage de lanceur (140) en une couche qui se situe un niveau au-dessus de sa couche courante en réaction à une brève opération de pression exécuté par le conducteur sur le commutateur au guidon (3) dans un état où le bouton de retour (43) est couramment sélectionné ; et
commuter le mode d'affichage de l'unité d'affichage (20) du deuxième mode d'affichage vers le premier mode d'affichage en réaction à une longue opération de pression exécutée par le conducteur sur le commutateur au guidon (3) dans un état où le bouton de retour (43) est couramment sélectionné.

9. Le système d'affichage (2) selon l'une quelconque des revendications 1 à 8, **caractérisé en ce que** le système d'affichage (2) est configuré pour afficher le bouton de retour (43) dans l'image d'affichage de lanceur (140) dans un état où le bouton de retour (43) a été d'abord sélectionné lorsque la couche de l'image d'affichage de lanceur (140) a été changée en une couche qui se situe un niveau au-dessus de sa couche courante.

10. Le système d'affichage (2) selon l'une quelconque des revendications 1 à 9, **caractérisé en ce que** le système d'affichage (2) est configuré pour faire glisser l'image d'affichage de lanceur (140) dans l'image d'affichage principal (100) lorsque le mode d'affichage est commuté du premier mode d'affichage vers le deuxième mode d'affichage.

11. Le système d'affichage (2) selon l'une quelconque des revendications 1 à 10, **caractérisé en ce que** le système d'affichage (2) est configuré pour faire glisser l'image d'affichage de lanceur (140) hors de l'image d'affichage principal (100), lorsque le mode d'affichage est commuté du deuxième mode d'affichage vers le premier mode d'affichage.

12. Le système d'affichage (2) selon l'une quelconque des revendications 1 à 11, **caractérisé en ce que** le système d'affichage (2) est configuré pour commuter le mode d'affichage automatiquement du deuxième mode d'affichage vers le premier mode d'affichage, lorsque le commutateur au guidon (3) n'a pas été actionné par le conducteur pendant une certaine période dans le deuxième mode d'affichage.

13. Le système d'affichage (2) selon l'une quelconque des revendications 1 à 12, **caractérisé en ce que** la pluralité d'icônes (42a à 42e) sont associées à différentes fonctions.

14. Le système d'affichage (2) selon l'une quelconque des revendications 1 à 13, **caractérisé en ce que** l'image d'affichage principal (100) inclut des informations d'infodivertissement transmises depuis le terminal portable (30).

15. Le système d'affichage (2) selon l'une quelconque des revendications 1 à 14, **caractérisé en ce que** le système d'affichage (2) est configuré pour afficher le bouton de retour (43) dans l'image d'affichage de lanceur (140) lorsque l'image d'affichage de lanceur (140) est affichée sur l'unité d'affichage (20) et un bouton montant (33) ou un bouton descendant (34) du commutateur au guidon (3) a été actionné par le conducteur.

16. Le système d'affichage (2) selon la revendication 15, **caractérisé en ce que** le système d'affichage (2) est configuré pour :
afficher le bouton de retour (43) dans l'image d'affichage de lanceur (140) de sorte que le bouton de retour (43) soit situé adjacent à une arête de fond de la première icône, en réaction à une opération exécutée par le conducteur sur le bouton montant (33) ; et
afficher le bouton de retour (43) dans l'image d'affichage de lanceur (140) de sorte que le bouton de retour (43) soit situé adjacent à une arête sommitale de la première icône, en réaction à une opération exécutée par le conducteur sur le bouton montant (34).

17. Véhicule à enfourcher (1) comprenant le système d'affichage (2) selon l'une quelconque des revendications 1 à 16.

18. Le véhicule à enfourcher (1) selon la revendication 17, dans lequel l'unité d'affichage (20) est disposée entre un compte-tours (60) et un compteur de vitesse (62) .
